**Europäisches Patentamt**

**European Patent Office**

**Office européen des brevets**

(11) Veröffentlichungsnummer : **0 349 872 B1**

(12) **EUROPÄISCHE PATENTSCHRIFT**

(45) Veröffentlichungstag der Patentschrift :
**11.11.92 Patentblatt 92/46**

(21) Anmeldenummer : **89111570.1**

(22) Anmeldetag : **24.06.89**

(51) Int. Cl.⁵ : **B29C 47/06, B29C 47/20**

(54) Verfahren und Vorrichtung zum Herstellen von Hohlkörpern aus thermoplastischen Kunstoffen.

(30) Priorität : **04.07.88 DE 3822524**

(43) Veröffentlichungstag der Anmeldung :
**10.01.90 Patentblatt 90/02**

(45) Bekanntmachung des Hinweises auf die
Patenterteilung :
**11.11.92 Patentblatt 92/46**

(84) Benannte Vertragsstaaten :
**AT BE CH DE ES FR GB GR IT LI LU NL SE**

(56) Entgegenhaltungen :
**EP-A- 0 249 866**
**WO-A-88/02689**
**DE-A- 2 617 898**

(56) Entgegenhaltungen :
**DE-A- 2 712 911**
**FR-A- 2 354 188**
**US-A- 3 985 490**
**US-A- 4 297 092**
**US-A- 4 548 569**

(73) Patentinhaber : **Krupp Kautex Maschinenbau
GmbH
W-5300 Bonn 3 (DE)**

(72) Erfinder : **Eiselen, Otto, Dipl.-Ing.
Am Wiesenplätzchen 8
W-5330 Königswinter 41 (DE)**

(74) Vertreter : **Koepsell, Helmut, Dipl.-Ing.
Mittelstrasse 7
W-5000 Köln 1 (DE)**

Jouve, 18, rue Saint-Denis, 75001 PARIS

**Beschreibung**

Die Erfindung betrifft ein Verfahren und eine Vorrichtung zum Herstellen von Hohlkörpern aus thermoplastischen Kunststoffen, deren Wandung als Laminat ausgebildet ist, welches aus mehreren miteinander verbundenen Schichten aus wenigstens zwei Kunststoffen mit unterschiedlicher Beschaffenheit besteht, mittels Extrusions-Blasformen, wobei zunächst schlauchförmige Vorformlinge, deren Wandung eine entsprechende Anzahl von Schichten aufweist, die absatzweise hergestellt werden unter Verwendung einer Extrusionseinheit, die wenigstens zwei Extruder und einen gemeinsamen Extrusionskopf aufweist, der mit einem ringförmigen Speicherraum für das Laminat, einem ringförmigen Kolben zum Entleeren des Speicherraums und einer Extrusionsöffnung versehen ist, durch welche die Vorformlinge extrudiert werden, wobei alle in den Extrusionskopf eintretenden Materialströme, aus denen die einzelnen Schichten des Laminats gebildet werden, durch den ringförmigen Kolben geführt und in diesem in die Querschnittsform eines Ringes gebracht werden.

Bei einem durch die DE-OS 36 35 334 bekannten Verfahren zum Herstellen von Hohlkörpern aus thermoplastischem Kunststoff im Blasverfahren wird so vorgegangen, daß sämtliche Materialströme bereits innerhalb des Ringkolbens zum End-Laminat, aus welchem die Wandung des Hohlkörpers entsteht, miteinander verbunden werden und danach das so gebildete End-Laminat durch einen in Strömungsrichtung trichterförmig sich erweiternden ringförmigen Kanalab schnitt im Ringkolben in Richtung auf den Speicherraum strömt. In dem Bereich des Ringkolbens, in welchem die einzelnen Schichten zum End-Laminat verbunden werden, weist letzteres eine Dicke, also eine radiale Erstreckung auf, die wesentlich geringer ist als die radiale Erstreckung, also die Breite des Speicherraumes. Dieser Unterschied wird durch den in Strömungsrichtung konisch sich erweiternden Kanalabschnitt des Ringkolbens überbrückt, so daß das End-Laminat an der Mündung des Kanals annähernd die radiale Erstreckung des Speicherraums aufweist. Diese Verfahrensführung, bei welcher die einzelnen Materialströme zur Bildung des End-Laminats an einer Stelle zusammengeführt werden, an welcher das End-Laminat einen im Vergleich zur Breite des Speicherraumes nur geringe Dicke aufweist, um es dann innerhalb des Kolbens auf eine Dicke zu bringen, die nahezu der Breite des Speicherraumes entspricht, setzt einen Extrusionskopf voraus, der sehr lang baut, da der Kolben entsprechend lang dimensioniert sein muß. Außerdem hat eine Laminatbildungsstelle mit geringer radialer Erstreckung, also mit geringer Dicke des Laminats im Augenblick seiner Bildung, zur Folge, daß die einzelnen sich dort zum Laminat verbindenden Materialströme eine entsprechend hohe Geschwindigkeit aufweisen mit der Folge, daß zwischen den einzelnen Strömen vorhandene Geschwindigkeitsunterschiede im Augenblick der Laminatbildung entsprechend groß sind, denn die relativen Schichtdicken des Laminats ergeben sich aus den entsprechenden Verhältnissen der Materialströme. D. h., daß bei größeren Dickenunterschieden zwischen den einzelnen Schichten stark unterschiedliche Strömungsgeschwindigkeiten entstehen.

Demzufolge liegt der Erfindung die Aufgabe zugrunde, Verfahren und Vorrichtung der einleitend beschriebenen Art so auszugestalten, daß bei möglichst kurzer Bauweise des Extrusionskopfes ein End-Laminat hergestellt werden kann, welches möglichst gleichmäßig ausgebildet und frei von Störungen ist.

Zur Lösung dieser Aufgabe schlägt die Erfindung vor, daß die den Ringkolben an seinem der Extrusionsöffnung zugekehrten Ende verlassenden, im Querschnitt ringförmigen Materialströme einzeln aus dem Ringkolben in den Speicherraum fließen und sich in letzterem zum Laminat vereinigen. Zweckmäßig wird dabei so verfahren, daß die Materialströme stirnseitig aus dem Ringkolben austreten, so daß die Materialströme, die jeweils die äußere und innere Schicht des Laminats bilden, mit der äußeren bzw. inneren Begrenzungswandung des Speicherraumes erst im Augenblick der Laminatbildung in Berührung kommen. Auf diese Weise kann erreicht werden, daß das gespeicherte End-Laminat nach seiner Bildung gegenüber der Wandung des Speicherraumes bis zum folgenden Entleerungshub keine wesentliche Bewegung ausführt. Diese begünstigt die Gleichmäßigkeit der Ausbildung des End-Laminats. Zudem wird durch die Laminatbildung im Speicherraum bei entsprechender Bemessung der Breite des Laminatbildungsbereichs vermieden, daß der Ringkolben mit einem besonderen kanalabschnitt versehen sein muß, innerhalb dessen das Laminat in Fließrichtung auf die radiale Erstreckung des Speicherraumes gebracht wird. Vielmehr ist es nach einem weiteren Vorschlag der Erfindung möglich, daß die radiale Erstreckung des Laminatbildungsbereiches annähernd der radialen Erstreckung des Speicherraums entspricht. D. h., daß die Gesamtheit der den Ringkolben an seiner der Extrusionsöffnung des Extrusionskopfes zugekehrten Ende verlassenden Materialströme beim Eintreten in den Speicherraum eine radiale Erstreckung aufweist, die annähernd der radialen Erstreckung des Speicherraumes entspricht. Eine derartige Verfahrensführung hat den Vorteil, daß das Laminat im allgemeinen im Augenblick seiner Bildung seine größte Dicke aufweist und im Zuge der weiteren Verformungen zum Vorformling im wesentlichen nur eine Verringerung seiner Dicke erfährt. Dieses stellt einen Streckvorgang dar, der immer eindeutig ist. Eine Vergrößerung der Dicke des Laminats erfordert einen Quell-oder Stauchvorgang bzw. Quell- oder Stauchströmungen, bei welchen die Gefahr besteht, daß das Laminat mit seinen verschiedenartigen Schichten gestört wird. Dieses Problem ist immer vorhanden, so daß man bestrebt ist, die erforderlichen Umformungen innerhalb des Extrusionskopfes als Dickenreduzierung oder Streckung des Laminats durchzuführen.

Der vorbeschriebenen Verfahrensführung, bei welcher die radiale Erstreckung des Laminatbildungsbereiches annähernd der radialen Erstreckung des Speicherraumes entspricht, sind insoweit Grenzen gesetzt, als die Festigkeit der zwischen den einzelnen Ringkanälen innerhalb des Kolbens befindlichen Trennwände und auch der äußeren und der inneren Begrenzungswand des Kolbens zu berücksichtigen ist. Eine weitestgehende Annäherung an die vorstehend genannte Bedingung wird normalerweise dadurch erreicht werden können, daß die Materialströme unmittelbar vor Verlassen des Ringkolbens an dessen der Extrusionsöffnung zugekehrten Stirnseite eine radiale Verbreiterung erfahren derart, daß sie in dem Bereich, in welchem sie den Ringkolben verlassen, nur noch durch schmale Zwischenräume, die durch die Trennwände innerhalb des Kolbens gebildet werden, voneinander getrennt sind.

Für die Qualität des zu bildenden Laminats, insbesondere dessen Regelmäßigkeit bezüglich Verteilung und Positionierung der einzelnen Schichten sowie der gleichmäßigen Dicke derselben, ist auch die Geschwindigkeit der einzelnen Ströme im Laminatbildungsbereich von großer Bedeutung. Die Geschwindigkeiten, mit denen die einzelnen Schichten im Laminatbildungsbereich aufeinandertreffen und miteinander verbunden werden, sollten möglichst nicht voneinander abweichen. Zumindest sollten die Unterschiede zwischen den Geschwindigkeiten der einzelnen Materialströme insbesondere im Laminatbildungsbereich so gering wie nur irgend möglich sein. Im Hinblick auf dieses Erfordernis schlägt die Erfindung weiterhin vor, daß die Dicke, also die radiale Dimension, der den Kolben verlassenden einzelnen Materialströme im wesentlichen proportional ist der Dicke der aus ihnen zu bildenden Schichten in dem im Speicherraum gespeicherten End-Laminat.

Im Extrusionsblasverfahren hergestellte Hohlkörper, insbesondere Behälter, werden in vielen Fällen mehrschichtig hergestellt, damit die Wandung des Hohlkörpers unterschiedlichen Anforderungen genügt, die von einem einzigen Kunststoff nicht erfüllt werden können. Als Beispiel seien Kraftstofftanks genannt, die einmal eine ausreichende mechanische Festigkeit aufweisen müssen, ohne daß jedoch der Kraftstoff durch die Behälterwandung in merklichen Mengen diffundieren darf. Die die mechanische Festigkeit betreffenden Eigenschaften werden bei gleichzeitiger Berücksichtigung wirtschaftlicher Erfordernisse derzeit am ehesten durch zur Gruppe der Polyolefine gehörenden Kunststoffe erfüllt. Das in vielen Fällen verwendete Polyethylen weist jedoch den Nachteil auf, daß es Kraftstoff hindurchdiffundieren läßt. Deshalb wird die Wandung eines Kraftstofftanks ggf. mit einer Diffusionssperre in Form einer Schicht beispielsweise aus Polyamid versehen. Da eine Schicht aus Polyethylen einerseits und eine Schicht aus Polyamid andererseits jedoch kaum eine feste Verbindung miteinander eingehen, ist es erforderlich, zwischen beiden Schichten eine Haftvermittlerschicht anzuordnen. Das Material dieser Haftvermittlerschicht geht eine ausreichend feste Verbindung sowohl mit beispielsweise Polyäthylen als auch Polyamid ein und hat im wesentlichen nur die Funktion, beide letztgenannten Schichten in ausreichend fester Weise miteinander zu verbinden.

In Abhängigkeit von den jeweiligen Anforderungen und den den einzelnen Schichten zugedachten Funktionen kann ein derartiges End-Laminat sieben und mehr Schichten aufweisen, wobei die einzelnen Schichten wiederum in Abhängigkeit von ihrer Funktion und der Beschaffenheit des sie bildenden Materials unterschiedlich dick sein können. So wird bzw. werden die Schicht(en) aus Polyolefin bei dem vorgenannten Beispiel wesentlich dicker sein als die Sperrschicht(en), die das Hindurchdiffundieren vermeiden soll(en) und die Haftvermittlerschicht(en), die zudem beide aus Materialien bestehen, die wesentlich teurer sind als beipsielsweise Polyethylen, das in vielen Fällen für die die mechanische Festigkeit bestimmende Trägerschicht(en) der Wand verwendet wird.

Bekannte Verfahren tragen diesem Sachverhalt keine Rechnung. Es wird häufig davon ausgegangen, daß sämtliche Schichten des End-Laminats gleich dick sind. Dies ist zumindest für die Mehrzahl der praktischen Anwendungen von Hohlkörpern mit einer mehrschichtigen Wandung unrealistisch, da aus den genannten Gründen ein Laminat, dessen Schichten bezüglich ihrer Dicke nicht oder nur wenig voneinander abweichen, in der Praxis, und sei es lediglich aus wirtschaftlichen Gründen, häufig nicht verwendet werden kann.

Wenn die den Ringkolben verlassenden Materialströme im Augenblick des Eintretens in den Speicherraum annähernd gleiche Querschnitte aufweisen, können unterschiedliche Dicken der das Laminat bildenden Schichten nur dadurch erreicht werden, daß die einzelnen Materialströme mit unterschiedlichen Geschwindigkeiten aus dem Ringkolben austreten, wobei die Geschwindigkeitsunterschiede bei der vorgenannten Voraussetzung etwa den Unterschieden bei den Schichtdicken entsprechen. Da die Unterschiede bezüglich der Dicke der einzelnen Schichten sehr groß sein, beispielsweise im Verhältnis von mehr als 1 : 10 zueinander stehen können, würden die Geschwindigkeitsunterschiede zwischen den einzelnen Materialströmen an der Laminatbildungsstelle entsprechend groß sein. Dabei ist es kaum möglich, ein Laminat zu bilden, dass hohen Qualitätsansprüchen genügt. Insoweit kommt dem Vorschlag der Erfindung, die Dicke der Materialströme im Laminatbildungsbereich zumindest annähernd proportional zu den Dicken der einzelnen Schichten im End-Laminat zu wählen, für die Herstellung von qualitativ hochwertigen Hohlkörpern eine besondere Bedeutung zu.

Da in vielen Fällen die Schichten, denen keine tragende Funktion zukommt, sehr dünn sein können, ggf. nur den Bruchteil eines Millimeters dick zu sein brauchen, wird es normalerweise erforderlich sein, die Schichtdicke im Bereich des Austrittes der Materialströme aus dem Ringkolben größer zu wählen als in dem im Speicherraum zu bildenden Laminat, da es aus fertigungstechnischen Gründen kaum möglich ist, Kanäle mit einer derart geringen radialen Erstreckung herzustellen. Dies ist jedoch weniger nachteilig, da mit der Wahl insgesamt größerer Schichtdicken in diesem Bereich eine Verringerung der absoluten Strömungsgeschwindigkeit einhergeht, so daß ggf. doch vorhandene Geschwindigkeitsunterschiede ohnehin weniger stark ins Gewicht fallen. Auf jeden Fall sind die Verhältnisse um ein Vielfaches günstiger als bei einer dünnen Laminatbildungsstelle, da die herstellungstechnischen Schwierigkeiten zur Erzielung entsprechend angepaßter Abmessungen im Ringkolben abnehmen.

Die Tatsache, daß das im Speicherraum gebildete und dort befindliche End-Laminat im allgemeinen eine wesentlich größere Dicke aufweist als die Wandung des daraus herzustellenden Hohlkörpers ist, wie bereits erwähnt, vorteilhaft. Die Verringerung der Laminatdicke auf die Dicke der Wandung des Hohlkörpers erfolgt normalerweise in mehreren Schritten. So erfährt das Laminat beim Passieren der ringförmigen Extrusionsöffnung eine erhebliche Verringerung seiner Dicke. Weiterhin wird normalerweise das die Wandung des durch die Extrusionsöffnung ausgestoßenen Vorformlings bildende Laminat eine weitere Verringerung seiner Dicke erfahren, wenn der Vorformling innerhalb einer Blasform durch inneren Überdruck zum blasgeformten Erzeugnis aufgeweitet wird.

In Abhängigkeit von den jeweilige Erfordernissen oder Bedingungen kann es sinnvoll sein, wenigstens zwei Material-Teilströme bereits im Kolben zu einem Vorlaminat zu vereinigen, welches dann in Form eines einzigen Materialstroms aus dem Ringkolben in den Speicherraum eintritt. D. h., daß die Materialströme, die aus dem freien Stirnende des Kolben austreten können, ihrerseits bereits aus zwei oder mehr Schichten bestehen können, die einen zusammenhängenden Materialstrom bilden. Das Erfordernis, zwei oder mehr Material-Teilströme zu einem ein Vorlaminat darstellenden Materialstrom zu vereinigen, kann sich z. B. daraus ergeben, daß der im Querschnitt des Ringkolbens verfügbare Raum nicht ausreicht, um für sämtliche einzelnen Materialströme jeweils ein Kanalsystem vorzusehen, welches bis zum freien, stirnseitigen Ende des Ringkolbens geführt werden kann. Zweckmäßigerweise wird eine Vorlaminatbildung mit Materialien durchgeführt, die gleich oder gleichartig sind und/oder deren Materialströme sich nicht wesentlich voneinander unterscheiden. Ein solches Vorlaminat kann sinnvollerweise zur Herstellung von Laminatschichten benutzt werden, bei welchen die durch die Schlauchbildung hervorgerufenen Zusammenflußlinien zueinander versetzt angeordnet sein sollen, um zu erreichen, daß die Zusammenflußlinie nur einen Teil der Dicke jeder ein Vorlaminat bildenden Schicht durchsetzt. Ein derartiges Vorlaminat wird in der Regel aus dem gleichen Material hergestellt oder einem Material gleichen Typs, wobei dann vorteilhaft beide Materialströme die gleiche Dicke besitzen. Darüber hinaus ist es sinnvoll, z. B. den Materialstrom für eine Barriereschicht sowie die beiden Materialströme für die zugeführten Haftvermittlerschichten zu einem Vorlaminat zu vereinigen. Alle drei Schichten sind in der Regel annähernd gleich dick. Dies bedeutet, daß die jeweiligen Materialströme mit im wesentlichen gleichen Geschwindigkeiten zusammengeführt werden. Da diese Schichten, wie bereits erwähnt, sehr dünn sein können, kann durch Herstellen des Vorlaminat eine Schichtdicke erzielt werden, die zu günstigeren Verhältnissen für das Einführen dieses Vorlaminats in den Speicherraum zur Bildung des End-Laminates führt.

Die Vorrichtung zum Herstellen von Hohlkörpern unter Anwendung des vorbeschriebenen Verfahrens kann so ausgebildet sein, daß innerhalb des Ringkolbens Kanalsysteme angeordnet sind, die an einem Ende mit wenigstens einer Zuführungsleitung für Kunststoffmaterial verbunden sind und sich innerhalb des Ringkolbens in Strömungsrichtung des Materials in einen im Querschnitt ringförmigen Kanalabschnitt fortsetzen, der an dem der Extrusionsöffnung zugekehrten Ende des Ringkolbens über einen ringförmigen Ausgang in den Speicherraum mündet, wobei die an der Stirnseite des Ringkolbens befindlichen Ausgänge für die Materialströme voneinander getrennt in den Speicherraum münden. Die Anzahl der Zuführungsleitungen für die Kanalsysteme kann mit der Anzahl der getrennt voneinander in den Speicherraum mündenden Ausgänge übereinstimmen. Es ist aber auch möglich, daß die Anzahl der Zuführungsleitungen kleiner - wenn wenigstens einer der durch die Zuführungsleitungen zugeführten Materialströme geteilt wird - oder größer ist - wenn aus wenigstens zwei durch die Zuführungsleitungen zugeführten Materialströme ein Vorlaminat gebildet wird - als die Anzahl der getrennt voneinander in den Speicherraum mündenden Ausgänge. Bei gleichzeitiger Anwendung beider Maßnahmen kann natürlich auch der Fall eintreten, daß die Anzahl der Zuführungsleitungen für die Kanalsysteme mit der Anzahl der getrennt voneinander in den Speicherraum mündenden Ausgänge übereinstimmt. Weiterhin ist es vorteilhaft, daß die radiale Erstreckung des Bereiches, innerhalb dessen die Ausgänge an der dem Speicherraum zugekehrten Stirnfläche des Ringkolbens angeordnet sind, annähernd der radialen Breite des Speicherraumes entspricht. Darüber hinaus können die einzelnen Ausgänge im Bereich ihrer Mündung in den Speicherraum eine Breite aufweisen, die im wesentlichen proportional ist der Dicke der Schichten im Laminat, die aus den die Ausgänge an der Stirnseite des Kolbens jeweils verlassenden Materialströmen gebildet werden.

Um den Extrusionskopf bei einem Wechsel von der Herstellung einer Hohlkörperart auf die Herstellung einer anderen Hohlkörperart schnell und ohne großen Aufwand an eine andere Verteilung der Schichtdicken anpassen zu können, kann es zweckmäßig sein, den dem Speicherraum zugekehrten Endabschnitt des Ringkolbens, der die Ausgänge der Kanalsysteme enthält, auswechselbar am Kolben anzubringen, um auf diese Weise eine schnelle Umstellung auf andere Schichtdicken und somit andere im Bereich ihrer Ausgänge bezüglich ihrer Breite dazu proportionale Kanalsysteme zu ermöglichen.

In der Zeichnung sind zwei derzeit bevorzugte Ausführungsbeispiele der Erfindung in Schema dargestellt. Es zeigen:

Fig. 1 im Schema die Seitenansicht eines Extrusionskopfes, teilweise im Schnitt, mit dem Ringkolben in seiner Stellung bei gefülltem Speicherraum,

Fig. 2 einen Schnitt nach der Linie II-II der Fig. 1,

Fig. 3 einen Schnitt nach der Linie III-III der Fig. 1,

Fig. 4 einen Ausschnitt aus Fig. 1 im Längsschnitt und in größerem Maßstab,

Fig. 5 eine der Fig. 3 entsprechende Darstellung, jedoch mit dem Ringkolben in seiner Stellung bei entleertem Speicherraum,

Fig. 6 eine der Fig. 4 entsprechende Darstellung einer zweiten Ausführungsform.

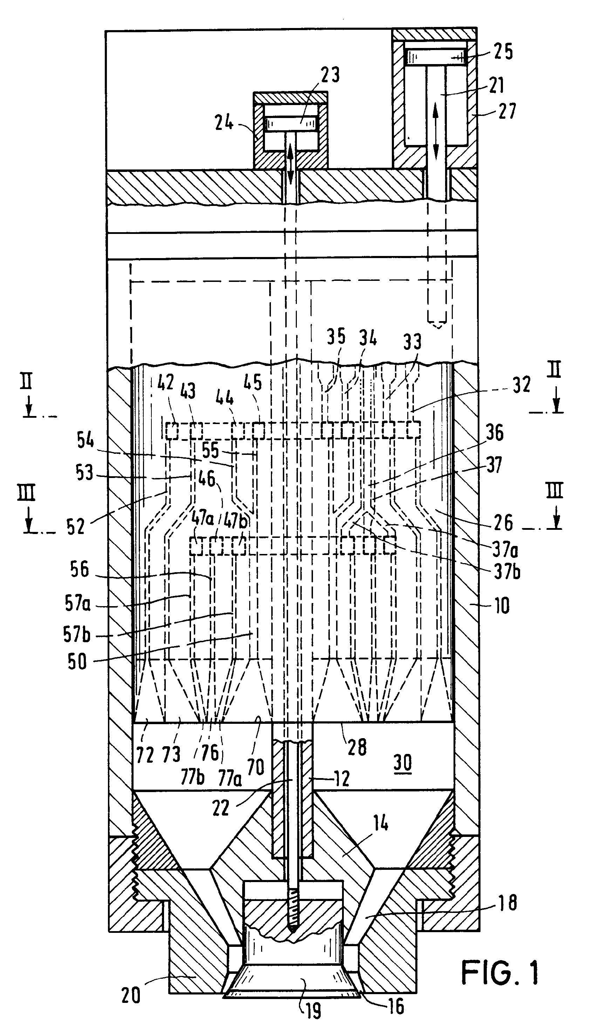

Der Extrusionskopf des Ausführungsbeispiels gemäß den Fig. 1 - 5 weist in der üblichen Weise ein Gehäuse 10 auf, innerhalb dessen ein dazu koaxialer Dorn 12 angeordnet ist, der an seinem unteren Ende ein Paßstück 14 trägt, welches den zur ringförmigen Extrusionsöffnung 16 führenden Ringkanal 18 innenseitig begrenzt. Innerhalb des Paßstückes 14 ist ein Düsenkern 19 geführt, der gemeinsam mit dem ihn umgebenden Düsenring 20 die Extrusionsöffnung 16 begrenzt. Der Düsenkern wird von einer Stange 22 getragen, die innerhalb des Dornes 12 geführt und an ihrer der Extrusionsöffnung 16 abgekehrten Ende mit dem Kolben 23 eines hydraulischen Zylinders 24 verbunden ist. Durch entsprechende Beaufschlagung des Kolbens 23 kann der Düsenkern 19 axial nach oben und unten zur Beeinflussung der Breite der Extrusionsöffnung 16 verschoben werden. Dies wird in der üblichen Weise dadurch ermöglicht, daß die einander gegenüberliegenden Flächen des Düsenkerns 19 und des ihn umgebenden Düsenringes 20 konisch verlaufend ausgebildet sind.

Innerhalb des Gehäuses 10 ist ein Ringkolben 26 axial hin-und herverchiebbar angeordnet. Der Ringkolben 26 ist an seinem der Extrusionsöffnung abgekehrten Endbereich mit der Kolbenstange 21 eines Kolbens 25 verbunden, der in einem hydraulischen Zylinder 27 geführt ist. Es können mehrere Kolben-Zylinder-Anordnungen 25, 27 vorgesehen sein, von denen in der Zeichnung jedoch nur eine dargestellt ist. Es ist auch möglich, nur eine Kolben-Zylinder-Anordnung vorzusehen, die dann so angeordnet sein würde, daß sie den Ringkolben 26 symmetrisch beaufschlagt.

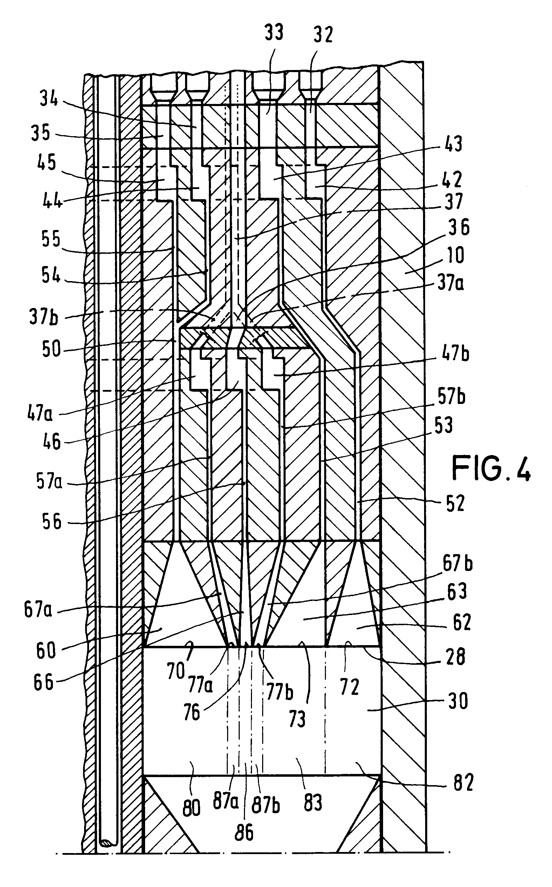

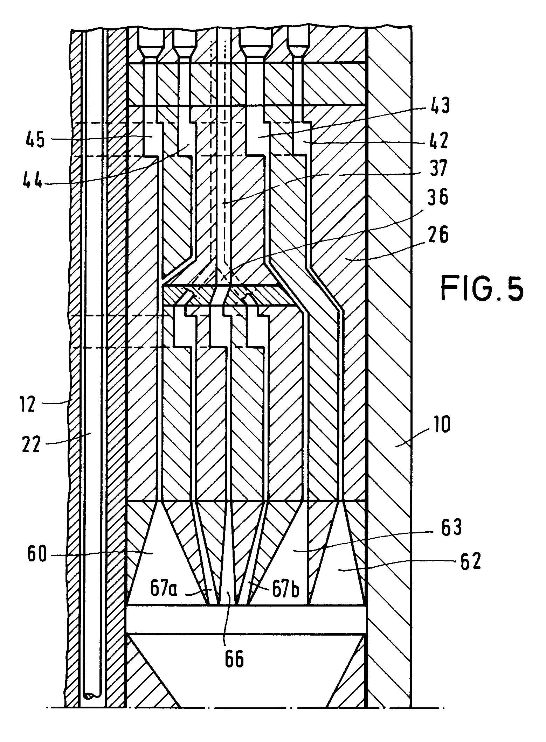

In den Figuren 1 und 4 nimmt der Ringkolben seine obere Endlage ein, in welcher seine der Extrusionsöffnung 16 zugekehrte Stirnseite 28 einen Speicherraum 30 oberseitig begrenzt, der im Gehäuse 10 im Bereich zwischen der Stirnseite 28 des Ringkolbens 26 und dem Paßstück 14 vorgesehen ist. Fig. 5 zeigt die untere Endlage des Ringkolbens 26, in die er durch die Zylinder-Kolben-Anordnungen 25, 27 verschoben wird.

Der Extrusionskopf ist mit sechs in der Zeichnung nicht dargestellten Extrudern verbunden, aus denen jeweils ein thermoplastisches Kunststoffmaterial oder ein anderes Material mit gleichen Eigenschaften bezüglich der Verarbeitbarkeit in den Extrusionskopf gefördert wird. Diese Extruder sind in geeigneter Weise mit innerhalb des Ringkolbens 26 angeordneten Kanalsystemen verbunden. Wie im einzelnen die Verbindung erfolgt, ist nicht Gegenstand der Erfindung. So ist beispielsweise eine Verbindung zwischen den Austrittsöffnungen der Extruder und den innerhalb des Ringkolbens 26 angeordneten Kanalsystemen in der in der DE-OS 36 35 334 beschriebenen Weise möglich. Andere Möglichkeiten der Verbindung sind z. B. in der DE-AS 21 61 356, in der DE-PS 26 39 665 und in der DE-PS 30 26 822 beschrieben.

Jeder der von den Extrudern kommenden Materialströme gelangt innerhalb des Kolbens 26 jeweils in einem im Querschnitt etwa kreisförmigen Zuführkanal 32, 33, 34, 35, 36, 37. Diese Zuführkanäle sind im wesentlichen parallel zur Längsachse des Extrusionskopfes verlaufend angeordnet. Die auf einem Radius des Ringkolbens angeordneten Zuführkanäle 32, 33, 34, 35 münden in koaxial zur Längsachse des Extrusionskopfes und in radialen Abständen voneinander angeordneten ringförmigen Verteilerkanälen 42, 43, 44, 45 , die in einer gemeinsamen, zur Längsachse des Extrusionskopfes senkrechten Ebene umlaufenden. Der auf demselben Radius angeordnete Zuführkanal 36 mündet in einem ringförmigen Verteilerkanal 46, der innerhalb des Ringkolbens 36 in einer zur Längsachse des Extrusionskopfes senkrechten Ebene umläuft, die sich in einem geringeren Abstand vom freien Ende 28 des Ringkolbens befindet als die Verteilerkanäle 42, 43, 44, 45. Der Zuführkanal 37, der gegenüber den anderen Zuführkanälen in Umfangsrichtung des Querschnittes des Extrusionskopfes versetzt angeordnet ist, setzt sich in zwei Verbindungskanäle 37a, 37b fort, die jeweils in einem ringförmigen Verteilerkanal 47a, 47b münden. Die ringförmigen Verteilerkanäle 47a, 47b sind in derselben Ebene angeordnet wie der ringförmige Verteilerkanal 46. Der Ringkolben 36 enthält somit insgesamt sieben ringförmige Verteilerkanäle, die aus Platzgründen aus zwei einen axialen Abstand voneinander aufweisenden Ebenen angeordnet sind. In den Verteilerkanälen wird der in Form eines geschlossenen Stranges durch die im Querschnitt vorzugsweise kreisförmigen Zuführkanäle jeweils zugeführte Materialstrom zu einem im Querschnitt ringförmigen Materialstrom umgeformt.

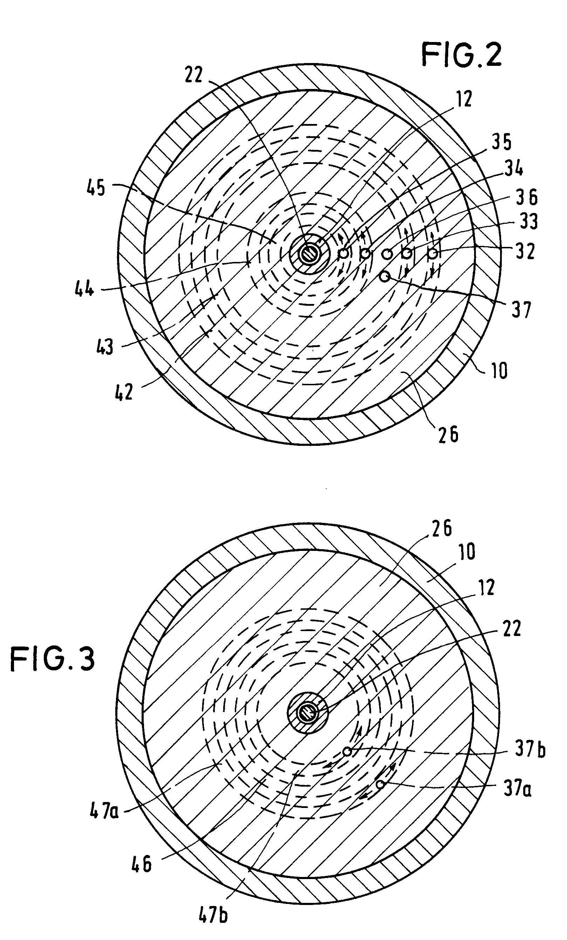

An jeden der Verteilerkanäle 42, 43, 44, 45, 46, 47a, 47b schließt sich jeweils ein Ringkanal 52, 53, 54, 55, 56, 57a, 57b an, wobei sämtliche Ringkanäle mit Ausnahme der Ringkanäle 54, 55 am stirnseitigen Ende 28 des Ringkolbens 26 in den Speicherraum 30 münden. Die Ringkanäle 54 und 55 münden in den Sammel-Ringkanal 50, so daß die die Ringkanäle 54, 55 durchströmenden Materialströme sich im Bereich ihrer Mündungen in den Sammel-Ringkanal 50 zu einem Vorlaminat vereinigen, welches aus zwei Schichten besteht. Die vorbeschriebene Ausgestaltung, bei welcher den beiden Ringkanälen 54, 55 ein gemeinsamer Sammel-Ringkanal 50 nachgeordnet ist, kann z. B. dann erforderlich sein, wenn die Querschnittsfläche des Ringkolbens 36 zu klein ist, als daß sämtliche Ringkanäle bis zum freien Ende des Kolbens fortgesetzt werden können. Ein anderer Grund für eine solche Ausgestaltung kann darin bestehen, daß in dem im Sammel-Ringkanal 50 sich bildenden Vorlaminat eine durchgehende Zusammenfluß-Naht vermieden werden soll, die an der Stelle entsteht, an welcher im Verteilerkanal die beiden in Umfangsrichtung den jeweiligen Verteilerkanal durchströmenden Material-Teilströme aufeinandertreffen und sich zu einem geschlossenen Ring verbinden. Diese Stelle wird im allgemeinen um 180° C gegenüber dem jeweiligen Zuführkanal in Umfangsrichtung versetzt angeordnet sein. In diesem Fall, also bei Bildung eines Vorlaminats zur Vermeidung einer durchgehenden Naht, werden jedoch die beiden Zuführkanäle 34, 35 für die Zufuhr der beiden das Vorlaminat bildenden Materialströme in Umfangsrichtung gegeneinander versetzt angeordnet sein, um die in den Materialströmen sich bildenden Nähte in Umfangsrichtung etwas gegeneinander zu versetzen. Die in Umfangsrichtung fließenden Material-Teilströme sind in den Fig. 2 und 3 der Zeichnung durch Pfeile angedeutet.

Der durch den Zuführkanal 37 zugeführte Materialstrom wird hingegen in zwei Material-Teilströme unterteilt, die durch die Verbindungskanäle 37a, 37b jeweils einem ringförmigen Verteilerkanal 47a, 47b zugeführt werden, so daß zwei Materialströme entstehen und demzufolge im End-Laminat wenigstens zwei Schichten vorhanden sind, die aus gleichem Material bestehen und von einem Extruder stammen.

Sämtliche in den Speicherraum 30 mündende Ringkanäle 52, 53, 57b, 56, 57a, 50 sind mit Endabschnitte 62, 63, 67b, 66, 67a, 60 versehen, die sich in Strömungsrichtung des durch die einzelnen Kanalsysteme fließenden Kunststoffes konisch erweitern, wobei die zwischen den Ringkanälen befindlichen Trennwände in Strömungsrichtung eine entsprechende Verringerung ihrer Dicke erfahren. Dies dient einmal dazu, die Geschwindigkeit der einzelnen Materialströme in diesen Endabschnitten 62, 63, 67b, 66, 67a, 60 zu verringern. Zum anderen werden dadurch die einzelnen Materialströme bereits beim Durchfließen dieser konisch sich erweiternden Endabschnitte einander angenähert, so daß sie beim Passieren des jeweiligen Ausgangs 72, 73, 77b, 76, 77a, 70 an der stirnseitigen Begrenzung 28 des Ringkolbens 26, die im wesentlichen durch die Enden der die einzelnen Ringkanäle begrenzenden Wandungen definiert ist, sich innerhalb des Speicherraumes 30 zum End-Laminat vereinigen. Die End-Laminatbildungsstelle liegt somit innerhalb des Speicherraumes 30, jedoch in unmittelbarem Anschluß an die Ausgänge 72, 73, 77b, 76, 77a, 70 der Ringkanäle bzw. der Endabschnitte derselben am stirnseitigen Ende des des Ringkolbens 26, der sich bei der Laminatbildung unter der Einwirkung des den Speicherraum 30 füllenden Laminats nach oben verschiebt, bis er die Endlage gemäß den Fig. 1 und 4 erreicht hat. Dabei ist es in der Regel nicht erforderlich, die Extrusionsöffnung 16 zu verschließen, da der Widerstand, den der Ringkolben 26 mit seinen Antriebsmitteln 25, 27 dem den Speicherraum 30 füllenden Laminat entgegensetzt, normalerweise kleiner ist als der Strömungswiderstand der Extrusionsöffnung 16.

Der Zeichnung läßt erkennen (Fig. 4), daß die einzelnen Materialströme im Augenblick des Passierens der Ausgänge 72, 73, 77b, 76, 77a, 70 am freien Ende 28 des Ringkolbens 26 die gesamte Breite, also die radiale Erstreckung, des Speicherraumes 30 ausfüllen. Dies hat zur Folge, daß im Augenblick der Laminatbildung, also der Verbindung der einzelnen Materialströme zum End-Laminat, nur geringfügige Querbewegung der einzelnen Materialströme erforderlich sind, um miteinander in Berührung zu kommen und sich dabei zum End-Laminat zu verbinden. Dies begünstigt ebenfalls die Gleichmäßigkeit der Laminatbildung und damit des dabei entstehenden Laminates, zumal während des Speicherns das Laminat innerhalb des Speicherraumes 30 ruht, also im wesentlichen unbewegt bleibt und somit während der Laminatbildung die Bewegung der die einzelnen Schichten bildenden Materialströme sich auf die innerhalb des Ringkolbens überwiegend in axialer Richtung verlaufende Bewegung beschränkt, deren Geschwindigkeit aufgrund der konischen Erweiterung der Endabschnitte 62, 63, 67b, 66, 67a, 60 innerhalb derselben ohnehin verhältnismäßig gering ist.

Sobald der Ringkolben 26 während des Füllvorganges seine in den Figuren 1 und 4 dargestellte obere Endlage erreicht hat, in welcher der Speicherraum 30 mit dem End-Laminat gefüllt ist, wird der Ringkolben 26 durch Beaufschlagen des Kolbens 25 in üblicher Weise in Richtung auf die Extrusionsöffnung 16 bewegt, wobei im Zuge dieser Hubbewegung gleichzeitig das im Speicherraum 30 gespeicherte Laminat in Richtung auf die Extrusionsöffnung 16 verschoben wird, bis der Ringkolben 26 seine in Fig. 5 dargestellte untere Endposition erreicht hat. Bis zum Passieren der Extrusionsöffnung 16 erfährt das Laminat im wesentlichen eine Reduzierung seiner radialen Ausdehnung, da die Spaltbreite des ringförmigen Kanals 18 bis zur Estrusionsöffnung 16 kleiner wird als die Breite des Speicherraumes 30. Es hat sich jedoch herausgestellt, daß die dadurch bewirkte stetige Abnahme der Dicke des Laminats wesentlich günstiger ist als ein Wechsel zwischen Verringerung und Vergrößerung oder umgekehrt der Dicke des Laminats.

Beim Ausführungsbeispiel gemäß den Fig. 1 bis 5 sind überdies die Endabschnitte 62, 63, 67b, 66, 67a, 60 der Ringkanäle 52, 53, 57b, 56, 57a, 50 derart konisch in Strömungsrichtung sich erweiternd ausgebildet, daß in der Ebene, in welcher die Ausgänge 72, 73, 77b, 76, 77a, 70 liegen, also beim Ausführungsbeispiel in der Ebene der Stirnfläche des Ringkolbens 26, die radiale Erstreckung der einzelnen Endabschnitte proportional ist der Dicke der einzelnen Schichten, die auf die die Ausgänge 72, 73, 77b, 76, 77a, 70 verlassenden Materialströme zurückgehen und daß im Speicherraum 30 gespeicherte End-Laminat bilden. Diese Schichten sind in Fig. 4 der Zeichnung angedeutet und mit 82, 83, 87b, 86, 87a und 80 bezeichnet. Aufgrund der vorbeschriebenen relativen Breite der Ausgänge 72, 73, 77b, 76, 77a, 70 wird erreicht, daß die Materialströme im Augenblick des Passierens der Ausgänge im wesentlichen gleiche Geschwindigkeiten aufweisen, so daß im Augenblick der Laminatbildung, die dadurch bewirkt wird, daß der Ringkolben 26 im Verlauf des Füllens des Speicherraums 30 von der Extrusionsöffnung 16 wegbewegt wird, keine merklichen Geschwindigkeitsunterschiede zwischen den einzelnen Materialströmen vorhanden sind. Zudem ist, wie bereits erwähnt, die Anordnung so getroffen, daß die die Ausgänge passierenden Materialströme sich insgesamt über nahezu die gesamte Breite des Speicherraums 30 erstrecken, so daß keine merklichen Querbewegungen der die Schichten 82, 83, 87b, 86, 87a, 80 bildenden Materialströme erforderlich sind, um sie zum Lamiant zu vereinigen.

Im übrigen ist es auch nicht erforderlich, das freie Ende des Ringkolbens 26 so auszubilden, daß die Enden sämtlicher Trennwände in einer zur Längsachse des Extrusionskopfes senkrechten Trennebene verlaufen. Hier könnten ggf. auch Bedingungen, die sich aus der erforderlichen mechanischen Festigkeit des Ringkolbens sowie der einzelnen Teile desselben ergeben, Berücksichtigung finden, wenngleich der Ringkolben mit seiner äußeren und seiner inneren Mantelfläche am Gehäuse 10 bzw. am Dorn 12 anliegend geführt ist, so daß die außen liegenden Trennwände, die einseitig durch den Druck des im äußeren Kanalsystem 32, 42, 52, 62 bzw. inneren Kanalsystem 34, 45, 55, 50 geführten Kunststoffströme unterliegen, am Gehäuse 10 bzw. am Dorn 12 eine Abstützung erfahren.

Im übrigen arbeitet der vorbeschriebene Extrusionskopf in der üblichen Weise. D. h., daß nach dem Entleerungshub, in dessen Verlauf der Ringkolben 26 aus der Position gemäß Fig. 4 in die gemäß Fig. 5 axial verschoben wird, das aus den Ausgängen des Ringkolbens 26 austretende Material den Ringkolben nach oben in seine in Fig. 4 dargestellte Ausgangslage verschiebt, wobei gleichzeitig der Speicherraum 30 mit dem Laminat gefüllt wird. Im allgemeinen wird so verfahren, daß auch während des Entleerungshubes die Extruder, aus denen die Materialströme in den Extrusionskopf gefördert werden, weiterlaufen, also kontinuierlich betrieben werden.

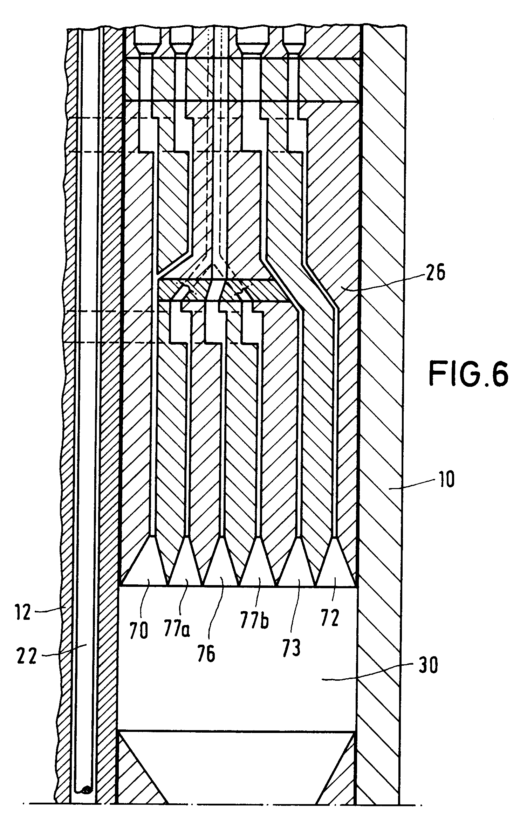

Das in Fig. 6 dargestellte Ausführungsbeispiel entspricht bezüglich seines konstruktiven Aufbaus und seines Betriebs in allen wesentlichen Einzelheiten dem Ausführungsbeispiel gemäß Fig. 1 - 5, so daß für gleiche Teile auch gleiche Bezugszeichen verwendet werden. Der einzige Unterschied zwischen beiden Ausführungsformen besteht darin, daß beim Ausführungsbeispiel gemäß Fig. 6 die Ausgänge 72, 73, 77b, 76, 77a, 70 der im Ringkolben 26 befindlichen Kanalsysteme im wesentlichen die gleiche radiale Erstreckung aufweisen. Bei unterschiedlich breiten Schichten in dem innerhalb des Speicherraums 30 zu bildenden End-Laminat würden somit die einzelnen Materialströme die Ausgänge mit unterschiedlichen Geschwindigkeiten verlassen. Die Ausführungsform gemäß Fig. 6 wird dann anwendbar sein, wenn die Unterschiede bezüglich der Dicke der einzelnen Schichten nicht allzu groß sind und/oder die absoluten Geschwindigkeiten, mit welchen die Materialströme die Ausgänge passieren, so gering ist, daß Geschwindigkeitsunterschiede nicht sehr stark ins Gewicht fallen. Der Kolben gemäß Fig. 6 weist den Vorteil eines etwas einfacheren Aufbaus auf.

## Patentansprüche

1. Verfahren zum Herstellen von Hohlkörpern aus thermoplastischen Kunststoffen, deren Wandung als Laminat ausgebildet ist, welches aus mehreren miteinander verbundenen Schichten aus wenigstens zwei Kunststoffen mit unterschiedlicher Beschaffenheit besteht, mittels Extrusions-Blasformen, bei welchem Verfahren zunächst schlauchförmige Vorformlinge, deren Wandung eine entsprechende Anzahl von Schichten aufweist, absatzweise hergestellt werden unter Verwendung einer Extrusionseinheit, die wenigstens zwei Extruder und einen gemeinsamen Extrusionskopf (10) aufweist, der mit einem ringförmigen Speicherraum (30) für das Laminat, einem Ringkolben (26) zum Entleeren des Speicherraumes (30) und einer Extrusionsöffnung (16) versehen ist, wobei alle in den Extrusionskopf (10) eintretenden Materialströme, aus denen die einzelnen Schichten des Laminats gebildet werden, durch den Ringkolben (26) geführt und in diesem in die Querschnittsform eines Ringes gebracht werden, dadurch gekennzeichnet, daß die den Ringkolben (26) an seinem der Extrusionsöffnung (16) zugekehrten Ende verlassenden, im Querschnitt ringförmigen Materialströme einzeln aus dem Ringkolben in den Speicherraum (30) fließen und sich in letzterem zum Laminat vereinigen.

2. Verfahren nach Anspruch 1, dadurch gekennzeichnet, daß die Gesamtheit der den Ringkolben (26) an seinem der Extrusionsöffnung (16) des Extrusionskopfes (10) zugekehrten Ende verlassenden Materialströme beim Eintreten in den Speicherraum (30) eine radiale Erstreckung aufweist, die wenigstens annähernd der radialen Erstreckung des Speicherraumes (30) entspricht.

3. Verfahren nach Anspruch 1, dadurch gekennzeichnet, daß die einzelnen Materialströme, die den Ringkolben (26) an seinem der Extrusionsöffnung (16) zugekehrten Ende verlassen und im Speicherraum (30) zum Laminat vereinigt werden, den Ringkolben (26) mit einer Dicke verlassen, die im wesentlichen proportional ist der Dicke, die die aus diesen Materialströmen jeweils gebildeten Schichten im zu speichernden Laminat aufweisen.

4. Verfahren nach Anspruch 3, dadurch gekennzeichnet, daß die Materialströme erst kurz vor dem Verlassen des Ringkolbens (26) auf die Dicke gebracht werden, die im wesentlichen proportional ist der Dicke, die die aus diesen Materialströmen jeweils gebildeten Schichten im zu speichernden Laminat aufweisen.

5. Verfahren nach Anspruch 1, dadurch gekennzeichnet, daß wenigstens zwei Material-Teilströme bereits im Ringkolben (26) zu einem im Querschnitt ringförmigen Vorlaminat vereinigt werden, welches den Ringkolben (26) als zusammenhängender Materialstrom verläßt.

6. Vorrichtung zum Herstellen von Hohlkörpern aus thermoplastischen Kunststoffen, deren Wandung als Laminat ausgebildet ist, welches aus mehreren miteinander verbundenen Schichten aus wenigstens zwei Kunststoffen mit unterschiedlicher Beschaffenheit besteht, mittels Extrusions-Blasformen, welche Vorrichtung mit einer Extrusionseinheit versehen ist, die wenigstens zwei Extruder und einen gemeinsamen Extrusionskopf (10) mit einem Speicherraum (30) für das Laminat und einem Ringkolben (26) zum Entleeren des Speicherraumes (30) und einer ringförmigen Extrusionsöffnung (16), aus welcher der bei der Entleerung des Speicherraums(30) gebildete Vorformling austritt, aufweist, wobei innerhalb des Ringkolbens (26) Kanalsysteme (32, 42, 52; 33, 43, 53; 34, 44, 54, 50; 35, 45, 55, 50; 36, 46, 56; 37, 37a, 37b, 47a, 47b, 57a, 57b) angeordnet sind, die Zuführungsleitungen (32, 33, 34, 35, 36, 37) für Kunststoffmaterialien und Verteilerkanäle (42, 43, 44, 45, 46, 47a, 47b) aufweisen, in welchem der jeweilige Materialstrom in eine ringartige Querschnittsform gebracht wird, wobei sich an den Verteilerkanal wenigstens ein Ringkanal (52, 53, 54 55, 56, 57a, 57b) anschließt, der an dem der Extrusionsöffnung (16) zugekehrten Ende des Ringkolbens (26) über einen stirnseitig am Ringkolben (26) befindlichen Ausgang (70, 72, 73, 76, 77a, 77b) mündet, dadurch gekennzeichnet, daß die an der Stirnseite des Ringkolbens (26) befindlichen Ausgänge (70, 72, 73, 76, 77a, 77b) voneinander getrennt in den Speicherraum (30) münden.

7. Vorrichtung nach Anspruch 6, dadurch gekennzeichnet, daß die Anzahl der Zuführungsleitungen für die Kanalsysteme mit der Anzahl der getrennt voneinander in den Speicherraum mündenden Ausgänge übereinstimmt.

8. Vorrichtung nach Anspruch 6, dadurch gekennzeichnet, daß die radiale Erstreckung des Bereiches, innerhalb dessen die Ausgänge (70, 72, 73, 76, 77a, 77b) an der dem Speicherraum (30) zugekehrten Stirnfläche des Ringkolbens (26) angeordnet sind, annähernd der radialen Breite des Speicherraumes (30) entspricht.

9. Vorrichtung nach Anspruch 8, dadurch gekennzeichnet, daß wenigstens ein Teil der in den Speicherraum (30) mündenden Ringkanäle (52, 53, 50, 56, 57a, 57b) vor dem jeweiligen Ausgang (72, 73, 70, 76, 77a, 77b) sich in Strömungsrichtung konisch erweitert.

10. Vorrichtung nach Anspruch 8 und 9, dadurch gekennzeichnet, daß die Summen der radialen Breiten der Endabschnitte (62, 63, 67b, 66, 67a, 60)

der Ringkanäle (52, 53, 57b, 56, 57a, 50) an ihren Ausgängen (72, 73, 77b, 76, 77a, 70) wenigstens annähernd gleich der radialen Breite des Speicherraumes (30) ist.

11. Vorrichtung nach Anspruch 6, dadurch gekennzeichnet, daß die einzelnen Ausgänge (70, 72, 73, 76, 77a, 77b) im Bereich ihrer Mündung in den Speicherraum (30) eine Breite aufweisen, die im wesentlichen proportional ist der Dicke der Schichten im Laminat, die aus den die Ausgänge (70, 72, 73, 76, 77a, 77b) an der Stirnseite des Ringkolbens (26) jeweils verlassenden Materialströme gebildet werden.

## Claims

1. A process for producing hollow bodies from thermoplastic materials, the wall of which is in the form of a laminate which comprises a plurality of interconnected layers of at least two plastics materials of different natures, by means of extrusion blow moulding, in which process firstly tubular preforms, the wall of which has a corresponding number of layers, are produced batch-wise using an extrusion unit which has at least two extruders and a common extrusion head (10) which is provided with an annular storage chamber (30) for the laminate, an annular piston (26) for emptying the storage chamber (30) and an extrusion opening (16), wherein all flows of material which pass into the extrusion head (10) and from which the individual layers of the laminate are formed are guided through the annular piston (26) and are put therein into the cross-sectional shape of a ring, characterised in that the flows of material which are of annular cross-section and which leave the annular piston (26) at its end towards the extrusion opening (16) flow individually out of the annular piston into the storage chamber (30) and combine in the latter to form the laminate.

2. A process according to claim 1 characterised in that the totality of the flows of material leaving the annular piston (26) at its end towards the extrusion opening (16) of the extrusion head (10), upon passing into the storage chamber (30), is of a radial extent which at least approximately corresponds to the radial extent of the storage chamber (30).

3. A process according to claim 1 characterised in that the individual flows of material which leave the annular piston (26) at its end towards the extrusion opening (16) and which are combined to form the laminate in the storage chamber (30) leave the annular piston (26) with a thickness which is substantially proportional to the thickness of the layers respectively formed from said flows of material in the laminate to be stored.

4. A process according to claim 3 characterised in that the flows of material, just before leaving the annular piston (26), are brought to the thickness which is substantially proportional to the thickness of the respective layers formed from said flows of material in the laminate to be stored.

5. A process according to claim 1 characterised in that at least two material sub-flows are already combined in the annular piston (26) to provide a pre-laminate of annular cross-section, which leaves the annular piston (26) as a coherent flow of material.

6. Apparatus for producing hollow bodies from thermoplastic materials, the wall of which is in the form of a laminate which is formed from a plurality of interconnected layers of at least two plastics materials of different natures by means of extrusion blow moulding, which apparatus is provided with an extrusion unit which has at least two extruders and a can extrusion head (10) with a storage chamber (30) for the laminate and an annular piston (26) for emptying of the storage chamber (30) and an annular extrusion opening (16) from which the preform which is formed upon emptying of the storage chamber (30) issues, wherein arranged within the annular piston (26) are duct systems (32, 42, 52; 33, 43, 53; 34, 44, 54, 50; 35, 45, 55, 50; 36, 46, 56; 37, 37a, 37b, 47a, 47b, 57a, 57b), which have feed conduits (32, 33, 34, 35, 36, 37) for plastics materials and distributor ducts (42, 43, 44, 45, 46, 47a, 47b), in which the respective flow of material is put into an annular cross-sectional shape, wherein adjoining the distributor duct is at least one annular duct ( 52, 53, 54, 55, 56, 57a, 57b) which at the end of the annular piston (26) which is towards the extrusion opening (16) opens by way of an outlet (70, 72, 73, 76, 77a, 77b ) disposed at the end of the annular piston (26), characterised in that the outlets (70, 72, 73, 76, 77a, 77b) at the end of the annular piston ( 26 ) open separately from each other into the storage chamber (30).

7. Apparatus according to claim 6 characterised in that the number of feed conduits for the duct systems is the same as the number of outlets which open separately from each other into the storage chamber.

8. Apparatus according to claim 6 characterised in that the radial extent of the region within which the outlets (70, 72, 73, 76, 77a, 77b) are arranged at the end face of the annular piston (26), which is towards the storage (30), approximately corresponds to the radial width of the storage chamber (30).

9. Apparatus according to claim 8 characterised in that at least a part of the annular ducts (52, 53, 50, 56, 57a, 57b) which open into the storage chamber (30) is conically enlarged in the direction of flow upstream of the respective outlet (72, 73, 70, 76, 77a, 77b).

10. Apparatus according to claim 8 and claim 9 characterised in that the sums of the radial widths of the end portions (62, 63, 67b, 66, 67a, 60) of the annular ducts (52, 53, 57b, 56, 57a, 50) at their outlets (72, 73, 77b, 76, 77a, 70) is at least approximately equal to the radial width of the storage chamber (30) .

11. Apparatus according to claim 6 characterised in that the individual outlets (70, 72, 73, 76, 77a, 77b) in the region of their mouth opening into the storage chamber (30) are of a width which is substantially proportional to the thickness of the layers in the laminate, which are formed from the respective flows of material leaving the outlets (70, 72, 73, 76, 77a, 77b) at the end of the annular piston (26).

## Revendications

1. Procédé pour réaliser des corps creux en matière thermoplastique ayant une paroi lamifiée constituée de plusieurs couches liées entre elles et faites d'au moins deux matières plastiques de qualités différentes, en opérant au moyen de moules d'extrusion-soufflage, ce procédé consistant à produire d'abord des ébauches tubulaires dont la paroi comporte un nombre correspondant de couches, et à débiter ces ébauches de manière intermittente en utilisant une unité d'extrusion qui comporte au moins deux machines extrudeuses et une tête d'extrusion commune (10), pourvue d'une chambre d'accumulation annulaire (30) pour la matière lamifiée, d'un piston annulaire (26) pour assurer le vidage de la chambre d'accumulation (30), et d'un orifice d'extrusion (16), tous les courants de matière qui pénètrent dans la tête d'extrusion (10), et à partir desquels sont constituées les diverses couches de la matière lamifiée, étant guidés à travers le piston annulaire (26) et se transformant dans celui-ci pour y prendre une forme de section annulaire, caractérisé en ce que les courants de matière de section transversale annulaire qui sortent du piston annulaire (26), à l'endroit de son extrémité située du côté de l'orifice d'extrusion (16), s'écoulent séparément hors du piston annulaire dans la chambre d'accumulation (30) et se réunissent dans celle-ci pour y constituer la matière lamifiée.

2. Procédé selon la revendication 1, caractérisé en ce que l'ensemble des courants de matière qui sortent du piston annulaire (26), à l'endroit de son extrémité située du côté de l'orifice d'extrusion (16) de la tête d'extrusion (10), présente en entrant dans la chambre d'accumulation (30) une étendue radiale qui correspond au moins à peu près à l'étendue radiale de la chambre d'accumulation (30).

3. Procédé selon la revendication 1, caractérisé en ce que les courants de matière qui sortent séparément du piston annulaire (26), à l'endroit de son extrémité située du côté de l'orifice d'extrusion (16), pour se rejoindre dans la chambre d'accumulation (30) afin d'y constituer la matière lamifiée, sortent chacun du piston annulaire (26) avec une épaisseur qui est sensiblement proportionnelle à l'épaisseur de chacune des couches correspondantes de la matière lamifiée à réaliser en attente dans la chambre d'accumulation à partir de ces courants de matière.

4. Procédé selon la revendication 3, caractérisé en ce que c'est seulement peu avant leur sortie du piston annulaire (26) que l'on donne aux courants de matière l'épaisseur qui est sensiblement proportionnelle à l'épaisseur de chacune des couches correspondantes de la matière lamifiée à réaliser en attente dans la chambre d'accumulation à partir de ces courants de matière.

5. Procédé selon la revendication 1, caractérisé en ce que l'on opère sur au moins deux courants partiels de matière dès leur passage dans le piston annulaire (26), pour les réunir en constituant une ébauche lamifiée de section transversale annulaire, qui sort du piston annulaire (26) sous la forme d'un courant cohérent de matière.

6. Dispositif pour réaliser des corps creux en matière thermoplastique ayant une paroi lamifiée constituée de plusieurs couches liées entre elles et faites d'au moins deux matières plastiques de qualités différentes, en opérant au moyen de moules d'extrusion-soufflage, ce dispositif comportant une unité d'extrusion pourvue au moins de deux machines extrudeuses et d'une tête d'extrusion commune (10) comportant une chambre d'accumulation (30) pour la matière lamifiée, un piston annulaire (26) pour assurer le vidage de la chambre d'accumulation (30), et un orifice annulaire d'extrusion (16) d'où sort l'ébauche réalisée au moment du vidage de la chambre d'accumulation (30), des systèmes de canaux internes (32, 42, 52; 33, 43, 53; 34, 44, 54, 50; 35, 45, 55, 50; 36, 46, 56; 37, 37a, 37b, 47a, 47b, 57a, 57b) étant prévus dans le piston annulaire (26), qui comprennent des canaux d'alimentation (32, 33, 34, 35, 36, 37) pour amener les matières plastiques et des canaux de distribution (42, 43, 44, 45, 46, 47a, 47b), dans lesquels le courant de matière correspondant subit une transformation pour prendre une forme de section transversale annulaire, et chaque canal de distribution étant raccordé à au moins un canal annulaire (52, 53, 54, 55, 56, 57a, 57b), qui débouche à l'endroit de l'extrémité du piston annulaire (26) située du côté de l'orifice d'extrusion (16), par une sortie (70, 72, 73, 76, 77a, 77b) qui se trouve sur la face frontale du piston annulaire, caractérisé en ce que les sorties (70, 72, 73, 76, 77a, 77b) qui se trouvent sur la face frontale du piston annulaire (26) débouchent dans la chambre d'accumulation (30) en étant séparées l'une de l'autre.

7. Dispositif selon la revendication 6, caractérisé en ce que le nombre des canaux d'alimentation des systèmes de canaux correspond au nombre des sorties qui débouchent séparément dans la chambre d'accumulation.

8. Dispositif selon la revendication 6, caractérisé en ce que l'étendue radiale de la zone dans laquelle sont disposées les sorties (70, 72, 73, 76, 77a, 77b) ménagées sur la face frontale du piston annulaire (26) située en regard de la chambre d'accumulation, correspond à peu près à la largeur radiale de la chambre d'accumulation(30).

9. Dispositif selon la revendication 8, caractérisé en ce qu'au moins un certain nombre de canaux annulaires (52, 53, 50, 56, 57a, 57b) qui débouchent dans la chambre d'accumulation (30) présentent un évasement conique dans le sens de l'écoulement, en amont de chaque sortie correspondante (72, 73, 70, 76, 77a, 77b).

10. Dispositif selon l'un des revendications 8 et 9, caractérisé en ce que la somme des largeurs radiales des parties terminales (62, 63, 67b, 66, 67a, 60) des canaux annulaires (52, 53, 57b, 56, 57a, 50) à l'endroit de leurs sorties (72, 73, 77b, 76, 77a, 70) est au moins à peu près égale à la largeur radiale de la chambre d'accumulation (30).

11. Dispositif selon la revendication 6, caractérisé en ce que chacune des sorties séparées (70, 72, 73, 76, 77a, 77b), à l'endroit où elle débouche dans la chambre d'accumulation (30), présente une largeur qui est sensiblement proportionnelle à l'épaisseur de la couche correspondante réalisée dans la matière lamifiée à partir de chacun des courants de matière issus des sorties (70, 72, 73, 76, 77a, 77b) qui sont situées sur la face frontale du piston annulaire (26).

FIG. 1

FIG.2

FIG.3

FIG.4

FIG.5

FIG.6